# EUROPEAN PATENT APPLICATION

(11) **EP 4 653 960 A1**
(43) Date of publication of application: **26.11.2025**
(21) Application number: 24177349.8
(22) Date of filing: 22.05.2024
(51) Int. Cl.: G05B 17/02

(54) **METHOD FOR TESTING A PROCESS PLANT SYSTEM**

(71) Applicant: ABB SCHWEIZ AG, 5400 Baden (CH)
(72) Inventor: HOERNICKE, Mario, 76829 Landau (DE); STARK, Katharina, 69469 Weinheim (DE); GRUENER, Sten, 69514 Laudenbach (DE); BECKER, Pascal, 76676 Graben-Neudorf (DE); SCHOCH, Nicolai, 69120 Heidelberg (DE); BRAUN, Roland, 53859 Niederkassel Lülsdorf (DE); ESKANDANI, Nafise, 64380 Rossdorf (DE); THODE, Sara Emilie, 0661 Oslo (NO); LINSBAUER, Lukas, 69221 Dossenheim (DE)
(74) Representative: Maiwald GmbH

(57) **Abstract**

The disclosure relates to a method (100) for testing a process plant system (10), the process plant system (10) comprising a simulation component (30) and a control component (20), the simulation component (30) being configured to simulate process handling hardware (30') for a handling process of the process plant system (10), and the control component (20) being configured to control the handling process of the process handling hardware (30'), the method comprising:
- obtaining test instruction data indicative of test instructions for testing the process plant system (10), wherein at least one of the test instructions is at least partially randomly generated;
- testing the process plant system (10) by providing the test instruction data to the control component (20) for controlling the handling process of the simulation component (30); and
- obtaining test result data indicative of a test result of the testing of the process plant system (10).

## Description

### TECHNICAL FIELD

The present invention relates to a method for testing a process plant system, a process plant system, a computer program product, and a computer-readable storage medium.

### BACKGROUND

Planning and construction of process plants require complex automation systems to ensure the control and monitoring of processes. Thus, during the development and implementation of process plants, various testing procedures may be employed to ensure that the process plant operates correctly and meets the requirements of the plant. For example, two common testing procedures are Factory Acceptance Testing (FAT) and Site Acceptance Testing (SAT). FAT involves testing the process plant at the manufacturer's production facility, while SAT involves testing the process plant on-site in the customer's actual plant. These tests aim to ensure that the system is correctly installed and functions properly. To create test cases for FAT and SAT, engineers often rely on documentation such as Piping and Instrumentation Diagrams (P&IDs) or conduct Hazard and Operability Studies (HAZOP). These methods help to identify potential hazards, risks, and failure conditions, which are then translated into test scenarios to validate the system's behavior under various conditions.

However, these testing methods may not cover all scenarios that may occur in a complex industrial environment. This can result in low test coverage and potential operational issues remain undetected in plant operation.

### SUMMARY

The above problem or need is at least partially solved or alleviated by the subject matters of the independent claims of the present disclosure, wherein further examples are incorporated in the dependent claims.

According to an aspect of the present disclosure, there is provided a method for testing a process plant system, the process plant system comprising a simulation component and a control component, the simulation component being configured to simulate a process handling hardware for a handling process of the process plant system, and the control component being configured to control the handling process of the process handling hardware, the method comprising:
- obtaining test instruction data indicative of test instructions for testing the process plant system, wherein at least one of the test instructions is at least partially randomly generated;
- testing the process plant system by providing the test instruction data to the control component for controlling the handling process of the simulation component; and
- obtaining test result data indicative of a test result of the testing of the process plant system.

The description refers to the process plant when the actual physical plant is meant. The process plant may comprise hardware components and software components. Specifically, the process plant may comprise, as hardware components, a process handling hardware. In an example of a chemical process plant, the process handling hardware may comprise all hardware elements such as but not limited to pumps, valves, containers, tubes, and so on, by means of which the chemical processing of a substance, e.g., fluid, may be performed. Other examples could be power plants, oil and gas refineries, and other process plant where process automation is used for example. Additionally, as a hardware element, the process plant may comprise a data processing system, which may be in the form of one or more computers, for carrying out process automation software. This process automation software may be a software component of the process plant. The process automation software may be configured to automate or, in other words, automatically control the process carried out by the process handling hardware.

On the other hand, the description refers to the process plant system as a system for the process plant, in particular for testing a process plant. The process plant system may optionally be part of the process plant. The process plant system may not have all of the software components and/or hardware components of the process plant. Specifically, the process plant system may be used to run tests on the software and/or hardware components of the process plant, without actually running the tests on the process plant itself, which may otherwise take damage, e.g., in the case of using randomly generated test instructions outside of certain boundaries of safe operation of the process plant. The process plant may, in fact, not even be yet built with its process handling hardware. However, the process handling hardware may have already been planned such that it may be simulated by the simulation component. This may imply that the simulation may accurately represent the behavior and functionality of the planned hardware for example. Also, the control component, in particular process automation software, for the process plant may have already been programmed. One or more of the software and/or hardware components of the actual process plant to be built or already existing may be substituted. For example, the process plant system may not comprise the actual or, in other words, physical process handling hardware. Instead, the process handling hardware may be simulated by the simulation component, e.g., based on connection diagrams, e.g., including hydraulic, electric, and similar connections, of the process plant. Thus, testing may be carried out without having the physically built process handling hardware and without damaging the physical process handling hardware. The simulation component may thus be a representation of the physical process handling hardware by means of software, i.e., it may be a software component, and react to the test instructions as far as possible like the physical process handling hardware. Hence, when test instructions are being executed by the process plant system, the simulation component will react as a physical process handling hardware but in terms of a simulation. The method for testing a process plant system may be particularly well-suited for modular plants due to the inherent modularity of the process and the process plant system for example. By focusing on individual modules and their interactions, the testing method may effectively identify potential faults and weaknesses within the overall process plant system for example.

The invention is based on the finding that randomly generated test instructions may offer significantly higher test coverage for an automation system in process plants compared to manually crafted test instructions like FAT and SAT. A similar approach is applied in software systems and is called Chaos Engineering. Chaos Engineering is a discipline within software engineering that involves deliberately injecting failures or errors into a system to proactively identify weaknesses, vulnerabilities, and points of failure. By subjecting software systems to "controlled chaos" it may be possible to gain insights into how the system behaves under adverse conditions and improve its resilience, reliability, and performance. Chaos Engineering involves the systematic execution of experiments, known as "Chaos Experiments" where various failure conditions are simulated in a controlled environment. These experiments aim to uncover hidden weaknesses and vulnerabilities that may not be apparent under normal operating conditions.

By applying random generation principles to process plant systems, one could systematically uncover weaknesses and failure conditions, validate system behavior under adverse conditions, and harden the system for example. However, while Chaos Engineering principles are applicable in various domains, including software systems, directly transferring them to process plant system testing is not possible due to the fact that process plant systems involve physical components and do have thus physical limitations. For example, a pressure in a pipe cannot be increased indefinitely to simulate a chaos scenario. Thus, unlike software systems, physical systems have real-world constraints and limitations that must be considered.

Test instructions may be instructions that guide the testing, specifying what actions or conditions may be applied to the process plant system. In the context of process plant systems, these instructions may comprise among others manipulating process parameters, setting control conditions, or simulating errors like equipment malfunctions, for example. Introducing randomness into test instruction generation may deviate from traditional methods such as FAT and SAT that rely on manually crafted test cases. This randomness may aim to uncover unexpected scenarios and potential weaknesses that might not be captured by deterministic test cases. At least partially randomly generated may suggest that not all aspects of the test instructions are entirely random. This may mean that some elements of the instructions may be predefined or guided by certain criteria, while others are left to chance, for example. Overall, generating test instructions at least partially randomly may introduce chaos engineering into process plant testing and thus may improve test coverage, identify hidden vulnerabilities, and enhance the overall robustness of process plant testing.

Some test instructions may be at least partially predefined to restrict a test range or reduce the duration of the tests, for example. Some test instructions might aim to intentionally introduce faults or errors into the process plant system, such as simulating a pump or sensor failure, for example. Other examples of faults or errors may include simulated network faults, sensor errors, invalid user input, or similar. It may also be possible to define specific test instructions that simulate a normal plant operation, such as a startup sequence, switching between different production modes, or handling an emergency scenario, for example. These test instructions may be forwarded to the control component, or process automation software and executed, for example. Thus, when the test instructions are executed, the control component may adjust the operation of the simulation component based on these instructions. For example, if a test instruction involves varying a speed of a pump, the control component may change the speed of the pump accordingly in the simulation. Similarly, if a test instruction simulates a sensor failure, the control component may manipulate the sensor readings within the simulation to reflect this failure. This may mean, that a sensor value is set to a constant value (e.g., 0) to simulate a complete failure. Alternatively, the sensor value may vary randomly within a certain range to simulate a drifting sensor, for example. Data that indicates an outcome of the testing may be collected as test result data. This test result data may include various metrics such as the performance of the simulated process handling hardware, and/or the process automation software, any anomalies or errors encountered during testing, and how the system responded to the test instructions provided, for example.

In an example, the test instructions may comprise one or more of a parameter, setting, or condition of the simulation component to be controlled by the control component. For example, a parameter may refer to a measurable or controllable value that may influence a state or behavior of a system. For example, parameters may be specific values for variables that may influence the performance of a process plant system or process plant component. For example, parameters could be such as an I/O list, and the respectively given min/max values or >/</= symbols in the C&E matrix. Further examples of variables may be a flow rate of a pump, a temperature of a reactor, a speed of a conveyor belt, or similar. A setting may refer to the configuration or customization of a particular function or feature of the process plant system or process plant component. Thus, settings could be operating modes, thresholds, or configuration options. A condition may refer to a state or situation under which a system operates or reacts, for example.

Conditions may be external events, internal states, e.g., critical states or normal states, or alarm conditions that influence the behavior of the system, for example. The test instructions may be combined, e.g., by linking various parameters, settings, and conditions, for example. As the test instruction is at least partially randomly generated, it may allow for defining and simulating a variety of test instructions to assess the response of the process plant system under different conditions. For example, different parameters such as temperature, pressure, and flow rate could be combined with various settings such as operating modes and thresholds. These combinations may then be tested under different states, such as normal states or critical states, under load, or during faults, for example. Thus, by combining and varying parameters, settings, and conditions, test instructions may be designed to cover a wide range of possible operating conditions. This may provide for testing the reaction of the process plant to unexpected events and faults and to recognize potential weak points at an early stage, for example. The partially randomized generation of test instructions may also help to simulate errors, faults, or unforeseen scenarios and thus improve test coverage, for example.

In an example, one or more of the parameter, setting, or condition in the at least one randomly generated test instruction may be randomly generated. This may mean that not only the test instructions themselves may be randomly generated, but within those instructions, specific parameters, settings, or conditions may also be randomly determined. In other words, this may mean that the values or characteristics of the parameters, settings, or conditions are chosen randomly, without following a predictable pattern or being based on predefined rules, for example. This may mean that an almost unlimited number of test instructions may be possible. An example could be as follows. There could be different aspects in a test instruction, like parameters, e.g., temperature of a reactor, settings e.g., limit values for the temperature, conditions, e.g., normal operation. The random generation of test instructions could now affect one or more of these aspects:
Option 1: Only the "temperature" parameter may be randomly selected (e.g., between 80°C and 100°C). The setting and condition may remain unchanged.
Option 2: Both the "temperature" parameter and the "Limit value" settings may be selected randomly. The condition "normal operation" may remain unchanged.
Option 3: All three aspects could be selected at random. The test instruction may then simulate a completely unexpected scenario. These options are exemplary scenarios and are thus to be understood as a non-limiting example.

To summarize, testing the process plant system by randomly generated test instructions may be a valuable tool for improving the safety and reliability of process plants. By simulating unexpected events and faults, potential weaknesses may be recognized and rectified at an early stage before they lead to serious failures, for example.

In an example, one or more of the randomly generated parameter, setting, or condition in the at least one randomly generated test instruction may be randomly generated within a predefined value range. This may mean for example, that while the parameters, settings, or conditions may be generated randomly, their values could be limited to a predetermined range. For example, a transmitter may be needed to be tested within a certain range of milliamperes (mA). The test instructions would specify that the transmitter is to be tested by varying a mA input within a predefined range.

For instance, if the transmitter is designed to accept mA input signals ranging from 4 mA to 20 mA, the test instruction data may include this range as part of the parameters, for example. During testing, the control component may randomly generate mA input values within a range, such as 4 mA, 8 mA, 16 mA, or similar, and apply them to the transmitter, for example. This approach may ensure that the transmitter is tested across a range of mA outputs that may be relevant to its normal operating conditions. Applying test instructions within a range may allow an evaluation of how the transmitter responds and performs within the specified range, helping to verify its functionality and reliability. Thus, instead of testing all conceivable values, the focus may be on realistic ranges, thus covering a broad spectrum of possible scenarios.

In an example, one or more of the randomly generated parameter, setting, or condition in the at least one randomly generated test instruction may be randomly generated outside of a predefined value range. It may be beneficial to assess how the process plant system reacts to abnormal or unexpected conditions that fall outside the predefined value range for example. For instance, for the transmitter that may be designed to accept mA input signals ranging from 4 mA to 20 mA, test instruction may comprise randomly generated current values such as 2 mA or 25 mA. These values may fall outside of the operational range of the transmitter, for example. By exposing the transmitter to such extreme current values, the testing may assess how effectively the system handles abnormal conditions, for example.

In an example, one or more of the randomly generated parameter, setting, or condition in one of at least two randomly generated test instructions may be randomly generated within a predefined value range, and one or more of the randomly generated parameters, settings, or conditions in another one of the at least two randomly generated test instructions may be randomly generated outside of the predefined value range. For example, in a real-world scenario a process plant system may be exposed to unintended errors or external influences that may lead to values outside a predefined range. By simulating such abnormal conditions with, weak points in the process or in the control component may be uncovered that may remain hidden under normal operating conditions.

In particular, in a set of test instructions, some parameters, settings, or conditions may be randomly generated within a predefined range, while others may fall outside of this range. For example, in one test instruction, the current values generated could fall within the predefined range of 4 mA to 20 mA, ensuring that the transmitter may be subjected to a normal operating condition. This may help to assess its performance under normal circumstances. The transmitter itself may be a hardware device that is simulated during testing. The simulation may provide the 4-20 mA signals for the process handling hardware, for example. In another test instruction within the same set, the current values could be randomly generated outside of this predefined range. For instance, the test instruction might specify current values like 2 mA or 25 mA, representing abnormal operating conditions. By including such extreme values, the testing process may evaluate how well the control component handles unexpected situations by a transmitter. The transmitter may measure values, such as temperature, using a sensing device like a PT100. This may e.g., result in a current between 4 and 20 mA. For instance, the lower range limit of the transmitter, such as -20°C, may correspond to 4 mA, while the upper range limit, such as 100°C, may correspond to 20 mA. The process plant system may translate these current values back into actual temperatures, making 4 mA equivalent to -20°C, for example. This temperature value may then be used for control within the process plant system, for example. By combining test instructions with parameters both within and outside of the predefined range, this method may provide a comprehensive assessment of the transmitter's behavior across a spectrum of operating conditions, ensuring its reliability and robustness in diverse scenarios, for example.

In an example, the test result may be indicative of an error of the simulation component and/or the control component. For example, the simulation may subject various test instructions to the process plant system, which may include intentionally provoking an error or abnormal behaviors in either the simulation component and/or the control component. These abnormal behaviors could include scenarios such as unexpected process parameter changes, equipment failures, or system malfunctions for example. For example, if an abnormal behavior is provoked during testing, it may indicate potential issues or weaknesses in the process plant system. Analyzing the test results and stored data may provide information as to whether the fault may lie in the control component or simulation component, for example.

In an example, the test result data may be used for debugging the process plant system. Debugging the process plant system may mean removing the error from the simulation component and/or control component by updating the simulation component and/or control component, for example. For example, if an error is detected in the simulation component or the control component during testing, the test result data may pinpoint the source of the issue, whether it may lie in the simulation component or control component, for example. Once the source of the error is identified, debugging may involve making necessary updates or modifications to the simulation component and/or control component to resolve the error. This may include correcting errors in the simulation component, refining control algorithms, adjusting parameter settings, updating software configurations, or similar, for example. For the control component, this may be adjusting parameter settings, updating software configurations, or refining control algorithms to ensure proper response to various conditions, for example.

In an example, the same test instruction data, for which the test result data being indicative of the error was obtained, may be provided to the control component for testing of the process plant system after using the test result data for debugging the process plant system. For example, once the debugging process is completed, the same test instruction data may be provided again to the control component for re-testing the process plant system. The erroneous simulation and corresponding test instruction data may be recorded during or after the testing for further analysis like error identification, for example. The identified error and the corrected test instruction data may be used in regression testing for example. Regression testing may involve re-testing previously executed testing. In other words, a closed-loop testing process where the same test instruction data that may lead to the identification of errors or issues may be reused after debugging the process plant system. This may further mean that there would be no need to create new test instructions for the same scenario for example.

In an example the steps of obtaining test instruction data, testing the process plant system, and obtaining test result data may be repeated with test instruction data being indicative of different test instructions being at least partially randomly generated. By repeatedly executing the testing with different randomly generated test instructions, different potential errors or failure states and behaviors of the process plant system may be examined, for example. Further, this may enable a more comprehensive verification of a system's performance and robustness under different conditions and scenarios or in other words harden the system, for example. Thus, by testing the process plant system and obtaining test result data in a repeated manner, variation and diversity in the execution of testing may be achieved to ensure that a wide range of potential error or unforeseen scenarios are covered to be able to react appropriately if such an error or unforeseen scenario may occur in the future process plant system of the process plant, for example. Additionally, by obtaining test result data in a repeated manner, a historical record of test instruction data, test results, and identified errors may be generated. By analyzing this historical record of test instruction data, trends, and patterns in error types or system vulnerabilities may be identified, for example. Thus, this iterative process may create a continuous learning loop, where past experiences may improve future testing and process plant system enhancements, for example.

In an example, the control component may be a control software, which may be emulated by a general-purpose computer. This may mean that the software responsible for controlling the process plant system may be executed on a general-purpose computer or a computer separate from the computers or systems used within the process plant itself, which simulates the functions of the control, for example. The emulation of the control software may allow for conducting tests and verifying the behavior of the process plant system without needing direct access to the physical control components, for example. This may be useful when the process plant system may not be fully implemented yet or when it may not be possible to access the control components directly, for example. Using a general-purpose computer to emulate the control software may provide flexibility in conducting testing since the testing may run on different computers without requiring specific hardware, for example. Additionally, emulation of the control software may facilitate easier troubleshooting and modifications to the control software as it may be tested and developed independently of the physical hardware of the process plant system. This may mean that the testing may be used throughout an automation engineering process, for example. Alternatively, the process automation software may be executed by a computer, which may also be used in the process plant, for example. For example, the computer in the process plant may be specifically designed or at least fulfil certain requirements for the process plant. Further, the computer of the process plant may be different from a general-purpose computer, e.g., it may be a microcontroller or similar.

In an example, the control component may be an automation component configured for automated control of the handling process of the process handling hardware. For example, the automation component may perform the task of automatically controlling the various components and processes within the process plant system on the basis of predefined instructions and parameters. In particular, a microprocessor may be used as part of the control component to provide the automated control functions for the operation of the process plant system, for example.

According to a second aspect of this disclosure, there is provided a process plant system comprising a simulation component configured to simulate a process handling hardware for a handling process of the process plant system and a control component configured to control the handling process of the process handling hardware.

According to a third aspect, there is provided a computer program product comprising instructions which, when the program is executed by a computer, cause the computer to carry out the method according to the first aspect of this disclosure. The computer program product may be a computer program as such, meaning a computer program consisting of or comprising a program code to be executed by the computer. Alternatively, the computer program product may be a product such as a data storage, in particular a computer-readable data storage medium, on which the computer program may be temporarily or permanently stored.

According to a fourth aspect of this disclosure, there is provided a computer-readable storage medium comprising instructions which, when executed by a computer, cause the computer to carry out the method according to the first aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1a shows a process plant with a process plant system;
Figure 1b shows a data processing system;
Figure 2 shows an exemplary connection diagram; and
Figure 3 shows a method for obtaining test result data indicative of a test result of the testing of the process plant system of Fig. 1a.

The Figures are schematic only and not true to scale. In principle, identical or like parts, elements, and/or steps are provided with identical or like reference numerals in the Figures.

### DETAILED DESCRIPTION OF THE INVENTION

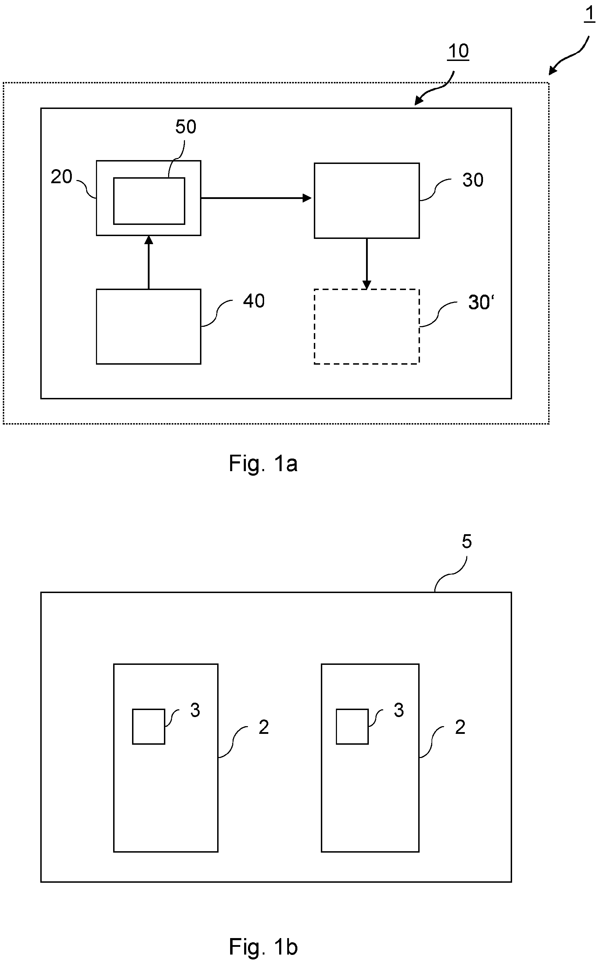

Figure 1a schematically shows an exemplary plant 1, e.g., in form of a process plant. The plant 1 comprises a process plant system 10. The process plant system 10 may be implemented in hardware and/or software, meaning that the process plant system 10 may be a computer-readable storage medium 3, as shown in Fig. 1b, executing software, thereby providing the process plant system 10 or the process plant system 10 may be the software as such and may be executed by a computer program product 50.

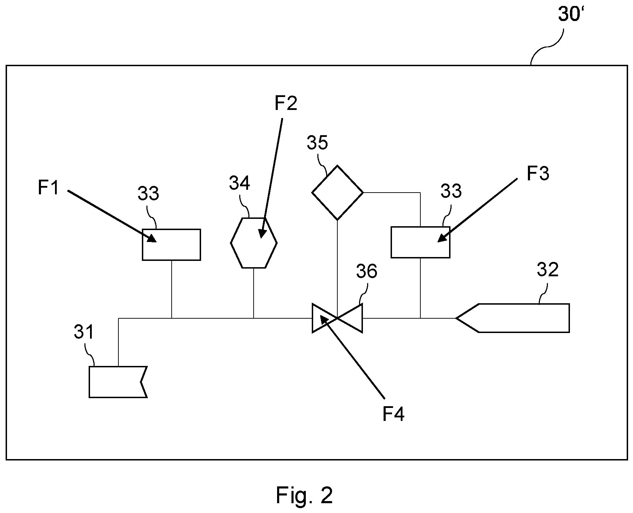

The process plant system 10 comprises a test instruction generator 40 configured to generate test instructions that are at least partially randomly generated. The process plant system 10 comprises further a simulation component 30 being configured to simulate a process handling hardware 30' for a handling process of the process plant system 10 and a control component 20 being configured to control the handling process of the process handling hardware 30'. Examples of such control components 20 could be programmable logic controllers (PLCs) or custom software written in languages like C++ or Python or similar for example. It is noted that the test instruction generator 40 is just illustrated for a simplified representation. It could also be part of the control component 20 for example. However, plant 1 may, in fact, not even be yet built with its process handling hardware. Instead, the process handling hardware 30' may be simulated by a simulation component 30, e.g., based on connection diagrams, e.g., including hydraulic, electric, and similar connections, of the plant 1. Such a connection diagram is exemplary shown in Fig. 2.

Thus, testing may be carried out without having the physically built process handling hardware and without damaging the physical process handling hardware. The simulation component 30 may thus be a representation of the physical process handling hardware by means of software, i.e., it may be a software component, and react to the test instructions as far as possible like the physical process handling hardware. Examples of such a simulation software may be general-purpose simulation tools like MATLAB/Simulink, AMESim, or AspenTech or domain-specific software designed for simulating process plants in particular industries or similar for example. Hence, when test instructions are being executed by the process plant system 10, the simulation component 30 will react as a physical process handling hardware 30' but in terms of a simulation. The process plant system 10 comprises at least one processing unit or processor, e.g., a CPU, and at least one computer program product 50, e.g. Computer programs are stored in the computer-readable storage medium 3.

It is further noted, that the process plant system 10 may be used to run tests on software and/or hardware components of the plant 1, without actually running the tests on the plant 1 itself, which may otherwise take damage, e.g., in the case of using randomly generated test instructions outside of certain boundaries of safe operation of the plant 1. That may comprise random changes to various parameters or operational parameters of the simulation component 30, such as pump speeds, valve positions, or temperature settings for example. Some test instructions may be at least partially predefined to restrict a test range or reduce the duration of the tests for example. Some test instructions might aim to intentionally introduce faults or disturbances into process plant system 10, such as simulating a pump or sensor failure for example. It could also be possible to define specific test instructions that simulate a normal plant 1 operation, such as a startup sequence, switching between different production modes, or handling an emergency scenario for example. These test instructions are forwarded to the control component 20, or process automation software, and are executed for example. Thus, when the test instructions may be executed, the control component 20 may adjust the operation of the simulation component 30 based on these instructions, for example.

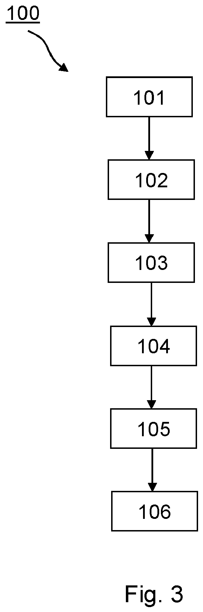

Figure 1b schematically shows a data processing system 5, which may comprise one or more computers 2, two of which are shown for the purpose of example. The data processing system 5, in particular one or both of the computers 2, in particular their processors, may be used to carry out the method 100 for testing a process plant system 10 as schematically illustrated in Fig. 3. Each one of the exemplary two computers 2 comprises at least one processing unit or processor, e.g., a CPU, and at least one computer-readable storage medium 3.

Figure 2 shows an exemplary connection diagram with examples of applied test instructions for testing a process plant system 10. For example, various test instructions may be applied to the process plant system 10, which may include intentionally provoking an error or abnormal behavior in either simulation component 30 and/or the control component 20. In this example, a process handling hardware 30' may be simulated by the simulation component 30 comprising hardware elements such as but not limited to gas inlets 31, gas outlets 32, transmitters 33, switches 34, filters 35, and valves 36. In this example, various randomly generated test instructions are executed by the simulation component 30. In this case, the applied test instructions might aim to intentionally introduce faults or disturbances into the process plant system 10 or into the process handling hardware 30' simulated by the simulation component 30 respectively. For example, one test instruction F1 applies or injects a high current flow to the transmitter 33. For instance, for the transmitter 33 may be designed to accept mA input signals ranging from 4 mA to 20 mA. The test instruction on the other side may comprise randomly generated current values such as 2 mA or 25 mA. These values fall outside of the typical operational range of the transmitter. The simulation component 30 may provide these mA signals for the process handling hardware 30', for example. By exposing the process handling hardware 30' to such extreme current values, the testing may assess how effectively the system handles abnormal conditions for example. In another example, the test instructions could specify that the transmitter 33 is to be tested by varying a mA input within a predefined range. The transmitter may measure values, such as temperature, using a sensing device like a PT100. This may e.g., result in a current between 4 and 20 mA. For instance, the lower range limit of the transmitter, such as -20°C, may correspond to 4 mA, while the upper range limit, such as 100°C, may correspond to 20 mA. The process plant system may translate these current values back into actual temperatures, making 4 mA equivalent to -20°C, for example. In yet another example F3 a test instruction could be a defect at the transmitter 33 like a static value over time or immediately moving to 0. A static value could simulate a scenario where the transmitter 33 fails to provide updated data over time, causing the control component 20 to receive stale or incorrect information for example. Testing the process plant system 10 under such conditions would help evaluate how a control component 20 may respond to stagnant sensor data and whether it may trigger appropriate alarms or corrective actions, for example. An immediate movement to 0 could represent a sudden failure of the transmitter 33, where it outputs zero signal unexpectedly. Testing the process plant systems 10 response to this abrupt change may be crucial for assessing its ability to detect and handle sensor failures promptly. This way, it may be possible to verify whether the control component 20 may recognize the fault and take appropriate measures, such as activating backup sensors or initiating a shutdown procedure, for example.

Another example could be a test instruction F2 for a switch 34, like a jitter on the switch 34. This may represent a simulation of irregular or random signal changes on the switch 34 like irregular signal changes, indicating that the control signal may be unstable. For example, this would test the reaction of the process plant system 10 to inconsistent input signals and show whether it may be capable of recognizing such disturbances and reacting appropriately, for example. Another example of a jitter on the switch 34 may be a signal loss or dropout, for example. The switch 34 could periodically fail temporarily or send no signal to simulate a temporary loss of connection or a fault. This may test the process plants system's 10 ability to respond to interruptions in the signal flow and take appropriate fault handling measures if necessary, for example.

Another example F4 could be a valve 36 that stops moving at some point. That could be due to a mechanical failure, such as actuator failure or blockage of the valve mechanism, or due to power failure, or software failure, or other possible failures, for example.

By simulating different failures in the test instructions, it would be possible to evaluate the ability of the process plant system 10 to deal with critical faults or malfunctions and may ensure that the process plant system 10 may be able to maintain operation or transition to a safe state to prevent damage. For example, if a test result may be an error of the simulation component 30 and/or the control component 20, the test result data may be used for debugging the process plant system 10.

Additionally, it may be possible to adjust a frequency of the applied test instructions to the process plant system 10. This may mean increasing or lowering a number of test injections into the process plant system 10, for example. For example, inputting a frequency of the applied test instructions into the process plant system 10 may allow to specify how often the testing should be performed during the test process. This may vary depending on the cycle times of a process, for example. For example, if the process requires rapid and frequent changes, it may be necessary to apply tests at a higher frequency to ensure that the process plant system 10 responds appropriately to these changes. On the other hand, a process with slower cycle times might require less frequent testing because conditions change less often and fewer tests might be sufficient to verify the process plant system 10 performance. By adapting the test frequency to the specific cycle times of the process, it may be possible to ensure that the tests are carried out at the right time to ensure adequate coverage of the various operating conditions and scenarios while maximizing the efficiency of the test procedure.

Additionally, it may be possible to set the process plant system 10 or certain areas into a specific state, like an abnormal state or critical state, and then execute testing, for example. Additionally, a user would be able to mark certain areas within the process or process plant system 10 as abnormal or critical or the like, for example. In these critical areas, a higher number of randomized tests could be executed, for example.

For example, there could be specific areas within the process plant system 10 where failures could have particularly severe consequences, or where the risk of failures or unexpected events is particularly high, or areas where failures have already been detected, for example. In this case, a user could mark these areas as critical. Marking specific areas as critical or the like could also be done automatically by the control component 20 for example.

The process plant system 10 could then automatically conduct a higher number of random tests in these specific or critical areas to ensure that the process plant system 10 is robust and reliable in these particularly important areas, for example. By conducting additional testing in critical areas, potential issues or weaknesses could be identified and addressed before they lead to significant impacts on the process plant system 10 or the plant 1 respectively.

Figure 3 shows a method 100 for testing the process plant system 10 of Fig. 1. For generating test instruction data indicative of at least one test instruction for testing the process plant system 10, the method may comprise a step 102, in which the at least one test instruction is generated at least partially randomly by a test instruction generator 40, for example. This at least one test instruction may comprise various parameters, settings, and conditions that affect the operation of the process plant system 10, for example. Partially randomly generated may mean that some test instructions may comprise random changes to various parameters or operational parameters of the simulation component 30, such as pump speeds, valve positions, or temperature settings, for example. Other test instructions may be partially predefined to restrict a test range or reduce the duration of the tests, for example.

In a next step 103, the test instruction data that comprises the randomly generated test instructions for testing the process plant system 10 is obtained by the process plant system 10. The test instruction data may be provided to a control component 20 of the process plant system 10. In other words, the control component 20, which may be a control software or automation software, may be responsible for managing and executing the test instructions. It may interact with the simulation component 30, which may represent the process handling hardware 30' of the process plant system 10, to control the handling process. In particular, the control component 20 may translate the test instructions into commands or actions that are executed by the simulation component 30. This could involve adjusting parameters, settings, or conditions within the simulation to simulate different operating conditions or fault conditions as specified by the test instructions, for example.

In a next step 104, test result data indicative of a test result of the testing of the process plant system 10 is obtained. This test result data may include various metrics such as the performance of the simulated process handling hardware 30' and/or the process automation software, any anomalies or errors encountered during testing, and how the process plant system 10 responded to the provided test instructions provided. The obtained test result data may then be used to evaluate the process plant system 10 or if the process plants system 10 fulfils desired functions and meets defined requirements, for example. The test result could be an error of the simulation component 30 and/or the control component 20. Thus, errors could be recognised and used for debugging the process plant system 10 for example.

In a step 105, after obtaining test result data indicating an error in the process plant system 10, the same test instruction data that led to the error or issue may be used again for further testing. For example, if the debugging process may be complete and the necessary fixes or improvements may be implemented, the same set of test instructions may be reapplied to the control component 20 for testing the process plant system 10 again. This may allow for verifying whether the changes made during debugging have effectively resolved the previous error or issue. Further, by analyzing the test results alongside the reused test instructions may pinpoint the source of the error (simulation component 30 or control component 20) for targeted debugging efforts.

In a last step 106, the steps of obtaining test instruction data, testing the process plant system 10 and obtaining test result data may be repeated with test instruction data being indicative of different test instructions being at least partially randomly generated. By repeating the testing process with different test instructions, the process plant system 10 may undergo a broader range of testing scenarios. This variation may help to assess the robustness and resilience of the process plant system 10 under different conditions and inputs. Additionally, the randomness introduced into the test instructions ensures that the testing process explores a diverse set of potential scenarios, including those that may not have been anticipated during initial testing.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of t 5% is also indicated by the terms "about" and "approximately" used herein with respect to a numerical value.

Any reference signs in the claims should not be construed as limiting the scope.

### LIST OF REFERENCE SIGNS

- 1: process plant
- 2: computer
- 3: computer-readable storage medium
- 5: data processing system
- 10: process plant system
- 20: control component
- 30: simulation component
- 30': process handling hardware
- 40: test instruction generator
- 50: computer program product
- 100: method
- 101 -106: steps
- F1 - F4: Test instructions indicative for different errors

## Claims

1. A method (100) for testing a process plant system (10), the process plant system (10) comprising a simulation component (30) and a control component (20), the simulation component (30) being configured to simulate a process handling hardware (30') for a handling process of the process plant system (10), and the control component (20) being configured to control the handling process of the process handling hardware (30'), the method comprising:
- obtaining test instruction data indicative of test instructions for testing the process plant system (10), wherein at least one of the test instructions is at least partially randomly generated;
- testing the process plant system (10) by providing the test instruction data to the control component (20) for controlling the handling process of the simulation component (30); and
- obtaining test result data indicative of a test result of the testing of the process plant system (10).

2. The method (100) of claim 1, wherein the test instructions comprise one or more of a parameter, setting, or condition of the simulation component (30) to be controlled by the control component (20).

3. The method (100) of claim 2, wherein one or more of the parameter, setting, or condition in the at least one randomly generated test instruction is randomly generated.

4. The method (100) of claim 3, wherein one or more of the randomly generated parameter, setting, or condition in the at least one randomly generated test instruction is randomly generated within a predefined value range.

5. The method (100) of claim 3 or 4, wherein one or more of the randomly generated parameter, setting, or condition in the at least one randomly generated test instruction is randomly generated outside of a predefined value range.

6. The method (100) of any one of claims 3 to 5, wherein one or more of the randomly generated parameter, setting, or condition in one of at least two randomly generated test instructions is randomly generated within a predefined value range, and one or more of the randomly generated parameter, setting, or condition in another one of the at least two randomly generated test instructions is randomly generated outside of the predefined value range.

7. The method (100) of any one of the previous claims, wherein the test result is an error of the simulation component (30) and/or the control component (20).

8. The method (100) of claim 7, wherein the test result data is being used for debugging the process plant system (10).

9. The method (100) of claim 8, wherein the same test instruction data, for which the test result data being indicative of the error or issue was obtained, is being provided to the control component (20) for testing of the process plant system (10) after using the test result data for debugging the process plant system (10).

10. The method (100) of any one of the previous claims, wherein the steps of obtaining test instruction data, testing the process plant system (10) and obtaining test result data are repeated with test instruction data being indicative of different test instructions being at least partially randomly generated.

11. The method (100) of any one of the previous claims, wherein the control component (20) is a control software, which is emulated by a general-purpose computer.

12. The method (100) of any one of the previous claims, wherein the control component (20) is an automation component configured for automated control of the handling process of the process handling hardware (30').

13. A process plant system (10) comprising a simulation component (30) configured to simulate process handling hardware (30') for a handling process of the process plant system (10) and a control component (20) configured to control the handling process of the process handling hardware (30').

14. A computer program (50) comprising instructions which, when the program is executed by a computer (2), causes the computer (2) to carry out the method (100) of any one of claims 1 to 12.

15. A computer-readable storage medium (3) comprising instructions which, when executed by a computer (2), cause the computer (2) to carry out the method (100) of any one of claims 1 to 12.
